# EUROPEAN PATENT APPLICATION

(11) **EP 4 730 133 A1**
(43) Date of publication of application: **22.04.2026**
(21) Application number: 25208255.7
(22) Date of filing: 13.10.2025
(51) Int. Cl.: G06F 11/07, G06F 11/1471

(54) **METHOD, APPARATUS, AND COMPUTER PROGRAM FOR AUTOMATICALLY RESETTING STATUS WHEN RPA ERROR OCCURS**

(30) Priority: 21.10.2024 KR 20240143541
(71) Applicant: Samsung SDS Co., Ltd., Seoul 05510 (KR)
(72) Inventor: Lee, Jae Cheol, 05510 Seoul (KR); Kim, Brad, 05510 Seoul (KR)
(74) Representative: Grünecker Patent- und Rechtsanwälte PartG mbB

(57) **Abstract**

The disclosure relates to a method, an apparatus, and a computer program for automatically resetting the statuses of error occurrence steps of an RPA process, and a method for automatically resetting the statuses of error occurrence steps of an RPA process of the disclosure presents a method including receiving status information for respective steps in reverse order of the RPA process from a step where an error was detected; adding a resetting operation corresponding to the status information to a resetting operation list; and resetting the statuses of the error occurrence steps based on the resetting operation list.

## Description

### CROSS-REFERENCE TO RELATED APPLICATION (S)

This application is based on and claims priority to Korean Patent Application No. 10-2024-0143541, filed on October 21, 2024, in the Korean Intellectual Property Office, the disclosure of which is herein incorporated by reference in its entirety.

### BACKGROUND OF THE INVENTION

### 1. Field of the invention

The disclosure relates to a method, an apparatus, and a computer program for automatically resetting status when robotic process automation (RPA) errors occurs and, more specifically, to a method, an apparatus, and a computer program for automatically resetting the status of steps in which RPA errors occurred.

### 2. Description of the Prior Art

Recently, RPA technology has been widely utilized to allow SW robots (hereinafter, bots) to mimic and execute tasks executed by users on a computer (or PC) according to predefined rules.

However, except in special cases, an RPA bot is configured to execute only a single automation process at a time, and thus has a sequential process execution characteristic. Accordingly, if the execution of an automation process fails due to an unpredictable factor (e.g., an error occurring at any stage of the automation process), there may arise a problem in which a task that must be processed within a specific time window cannot be performed in a timely manner (which may prevent subsequent processes from being executed). For this reason, most RPA solutions employ various error recovery methods that are applied to ensure that the process succeeds as much as possible during a single execution of the process. In this case, for the preceding steps that require re-execution for error recovery, it is necessary to proactively perform resetting of each step prior to such re-execution.

According to the prior art, when an error occurs, it was necessary to directly develop separate error handling logic to individually reset the outputs of each preceding step. In particular, it was necessary for individual developers to accurately recognize the previous state and directly specify which steps must be reset and which steps must be designated as the starting point for re-execution. For these reasons, error recovery is considered the most challenging part of RPA process development for entry-level engineers, and even for advanced engineers, it is the most time-consuming part of development.

In other words, despite the need for a method to automatically detect the reset starting point when an error occurs during RPA process execution, and to automatically reset the status of the steps that need a reset and re-execute them, a suitable solution has not yet been presented.

### SUMMARY OF THE INVENTION

The disclosure is conceived to address the problems of the prior art as described above, and aims to provide a method, an apparatus, and a computer program for automatically resetting the status in the event of an RPA error.

In addition, the disclosure aims to provide a method, an apparatus, and a computer program for automatically resetting, when RPA errors occur, the statuses of steps where the errors occurred.

In addition, the disclosure aims to provide a method, an apparatus, and a computer program for automatically resetting the statuses of steps where an RPA error occurred, which are capable of monitoring the previous and current statuses of each executed step during the RPA process execution, and classifying and storing the differences thereof.

In addition, the disclosure aims to provide a method, an apparatus, and a computer program for automatically resetting the statuses of steps where an RPA error occurred, which are capable of defining an operation of resetting the corresponding steps according to the differences between the previous and current statuses of each executed step during the RPA process execution.

In addition, the disclosure aims to provide a method, an apparatus, and a computer program for automatically resetting the statuses of steps where an RPA error occurred, which are capable of storing the status and operations for resetting each step during the RPA process execution.

In addition, the disclosure aims to provide a method, an apparatus, and a computer program for automatically resetting the statuses of steps where an RPA error occurred, which are capable of automatically detecting re-executable steps during an RPA process recovery process.

In addition, the disclosure aims to provide a method, an apparatus, and a computer program for automatically resetting the statuses of steps where an RPA error occurred, which are capable of automatically performing a reset during an RPA process recovery process.

In addition, the disclosure aims to provide a method, an apparatus, and a computer program for automatically resetting the statuses of steps where an RPA error occurred, which are capable of automatically performing status recovery during an RPA process recovery process.

The technical problems to be solved in the disclosure are not limited to the technical problems mentioned above, and other technical problems not mentioned herein will be clearly understood by those skilled in the art to which the disclosure pertains from the description in this specification.

According to a first aspect of the disclosure, a method for automatically resetting statuses of error occurrence steps of an RPA process may include receiving status information for respective steps in reverse order of the RPA process from a step where an error was detected, adding a resetting operation corresponding to the status information to a resetting operation list, and resetting the statuses of the error occurrence steps based on the resetting operation list.

Here, the status information may be information indicating statuses of respective steps constituting the RPA process, based on at least one status change detection object.

Here, the status change detection object may include at least one of Process, File, Window, Web Browser, and Screen.

Here, the status information about Process may be information regarding whether a new process has been generated within a system at a certain step, the status information about File may be information regarding whether a file has been created, deleted, or changed within the system at a certain step, the status information about Window may be information regarding whether a window has been created, closed, or changed within the system at a certain step, the status information about Web Browser may be information regarding a URL change within a current web browser at a certain step, and the status information about Screen may be information regarding a change in a system screen at a certain step.

Here, the resetting of the statuses of the error occurrence steps may be repeated in reverse order of the RPA process from the step where the error was detected until a reset starting step is reached.

Here, when a window is created or a change occurs in a window, or when a change occurs in a web browser and a change occurs in a screen, a corresponding step may be determined as the reset starting step.

Here, the adding of the resetting operation corresponding to the status information to the resetting operation list may be performed when there is status information matching the status information in a resetting operation definition table.

Here, the resetting operation definition table may be a table defining operations for resetting the statuses of the respective steps constituting the RPA process.

Here, the resetting operation list may include information about at least one resetting operation of resetting respective steps in reverse order of the RPA process from the step where the error was detected to a reset starting step.

According to a second aspect of the disclosure, there may be provided a computer program stored on a medium to execute, in conjunction with hardware, a method for automatically resetting statuses of error occurrence steps of the RPA process.

According to a third aspect of the disclosure, an apparatus for automatically resetting statuses of error occurrence steps of an RPA process may include a processor, and the processor may be configured to receive status information for respective steps in reverse order of the RPA process from a step where an error was detected, add a resetting operation corresponding to the status information to a resetting operation list, and reset the statuses of the error occurrence steps based on the resetting operation list.

Here, the status information may be information indicating statuses of respective steps constituting the RPA process, based on at least one status change detection object.

Here, the status change detection object may include at least one of Process, File, Window, Web Browser, and Screen.

Here, the status information about Process may be information regarding whether a new process has been generated within a system at a certain step, the status information about File may be information regarding whether a file has been created, deleted, or changed within the system at a certain step, the status information about Window may be information regarding whether a window has been created, closed, or changed within the system at a certain step, the status information about Web Browser may be information regarding a URL change within a current web browser at a certain step, and the status information about Screen may be information regarding a change in a system screen at a certain step.

Here, the resetting of the statuses of the error occurrence steps may be repeated in reverse order of the RPA process from the step where the error was detected until a reset starting step is reached.

Here, when a window is created or a change occurs in a window, or when a change occurs in a web browser and a change occurs in a screen, a corresponding step may be determined as the reset starting step

Here, the adding of the resetting operation corresponding to the status information to the resetting operation list may be performed when there is status information matching the status information in a resetting operation definition table.

Here, the resetting operation definition table may be a table defining operations for resetting the statuses of the respective steps constituting the RPA process.

Here, the resetting operation list may include information about at least one resetting operation of resetting respective steps in reverse order of the RPA process from the step where the error was detected to a reset starting step.

Accordingly, in the method, the apparatus, and the computer program for automatically resetting the status in the event of an RPA error according to an embodiment of the disclosure, it is possible to automatically reset the statuses of steps where the error occurred.

In addition, in the method, the apparatus, and the computer program for automatically resetting the statuses of the steps where an RPA error occurred according to an embodiment of the disclosure, it is possible to monitor the previous and current statuses of each executed step during the RPA process execution, and classify and store the differences thereof.

In addition, in the method, the apparatus, and the computer program for automatically resetting the statuses of the steps where an RPA error occurred according to an embodiment of the disclosure, it is possible to define an operation of resetting the corresponding steps according to the differences between the previous and current statuses of each executed step during the RPA process execution.

In addition, in the method, the apparatus, and the computer program for automatically resetting the statuses of the steps where an RPA error occurred according to an embodiment of the disclosure, it is possible to store the status and operations for resetting each step during the RPA process execution.

In addition, in the method, the apparatus, and the computer program for automatically resetting the statuses of the steps where an RPA error occurred according to an embodiment of the disclosure, it is possible to automatically detect re-executable steps during an RPA process recovery process.

In addition, in the method, the apparatus, and the computer program for automatically resetting the statuses of the steps where an RPA error occurred according to an embodiment of the disclosure, it is possible to automatically perform a reset during an RPA process recovery process.

In addition, in the method, the apparatus, and the computer program for automatically resetting the statuses of the steps where an RPA error occurred according to an embodiment of the disclosure, it is possible to automatically perform status recovery during an RPA process recovery process.

The effects obtainable from the disclosure are not limited to the effects mentioned above, and other effects not mentioned will be clearly understood by those skilled in the art to which the disclosure pertains from the description in this specification.

### BRIEF DESCRIPTION OF THE DRAWINGS

The accompanying drawings, which are included as part of the detailed description to assist in understanding the disclosure, provide embodiments of the disclosure and illustrate the technical concepts of the disclosure in conjunction with the detailed description.
FIG. 1 illustrates a method for processing section errors in an RPA process according to the prior art.
FIG. 2 illustrates a process for recovering an RPA process when an error occurs during execution of the RPA process according to an embodiment of the disclosure.
FIG. 3 is a flowchart illustrating a method for automatically resetting the status of steps where an RPA error occurred and performing re-execution according to an embodiment of the disclosure.
FIG. 4 is a schematic diagram illustrating an apparatus for automatically resetting the status of steps where an RPA error occurred and re-executing an RPA process according to an embodiment of the disclosure.
FIG. 5 is a table showing status change detection objects according to an embodiment of the disclosure.
FIG. 6 illustrates a schema for storing status changes occurring during execution of an RPA process according to an embodiment of the disclosure.
FIGS. 7 and 8 illustrate status information tables for storing status changes for each step, which occur during execution of an RPA process, according to an embodiment of the disclosure.
FIG. 9 is a flowchart illustrating a process for detecting a re-execution (resetting) start step and outputting status information of the re-execution (resetting) start step according to an embodiment of the disclosure.
FIG. 10 illustrates a resetting operation definition table according to an embodiment of the disclosure.
FIG. 11 is a flowchart illustrating a process for generating a resetting operation list according to an embodiment of the disclosure.
FIG. 12 illustrates a resetting operation list according to an embodiment of the disclosure.
FIG. 13 illustrates an apparatus to which the proposed method of the disclosure is applicable.

### DETAILED DESCRIPTION OF THE EXEMPLARY EMBODIMENTS

Hereinafter, embodiments disclosed in this specification will be described in detail with reference to the accompanying drawings. The purpose, specific advantages, and novel features of the disclosure will become more apparent from the following detailed description and preferred embodiments in association with the accompanying drawings.

Prior to the description, the terms or words used in this specification and claims are defined by the inventor in a manner that best describes the invention, and should be interpreted in accordance with the technical concepts of the disclosure, which are merely intended to describe embodiments and should not be construed as limiting the disclosure.

In assigning reference numerals to the components, regardless of the reference numerals, identical or similar components will be assigned the same reference numerals, and redundant descriptions thereof will be omitted. The terms "module" and "unit" used for components in the following description are assigned or used interchangeably only for the convenience of drafting the specification, and do not have distinct meanings or roles in themselves, and may indicate software or hardware components.

In describing the components of the disclosure, a component expressed in the singular form shall be understood to include the plural form as well, unless otherwise specified. In addition, terms such as "first," "second," and the like are used merely to distinguish one component from another, and the components are not limited to such terms. In addition, when a certain component is described as being connected to another component, it should be understood that other components may be interposed between them.

In addition, when describing the embodiments disclosed herein, detailed descriptions of related known technologies will be omitted if they are deemed to obscure the subject matter of the embodiments disclosed herein. In addition, the attached drawings are intended solely to facilitate understanding of the embodiments disclosed herein, and the technical concepts disclosed herein are not limited to the attached drawings, and it should be understood that the disclosure encompasses all modifications, equivalents, and alternatives within the concept and technical scope of the disclosure.

Hereinafter, exemplary embodiments of a method, an apparatus, and a computer program for automatically resetting the status of steps where an RPA error occurred in accordance with the disclosure will be described in detail with reference to the attached drawings.

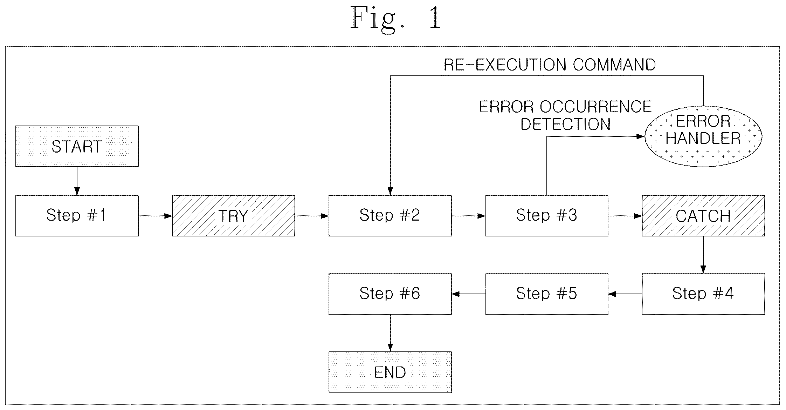

FIG. 1 illustrates a method for processing section errors in an RPA process according to the prior art.

An RPA bot has a sequential process execution characteristic, except in special cases, to execute only a single automation process at a time. If the RPA bot fails to execute an automated process due to unpredictable factors (e.g., if an error occurs at any step constituting the automation process), tasks that must be processed within a specific time window may not be performed (resulting in the inability to execute all subsequent processes). Therefore, most RPA solutions employ various error recovery methods to maximize the success of a single process execution. A commonly used error recovery method is a section exception processing method through Try-Catch. For example, RPA developers group the sections where failure (due to an error) is expected into Try-Catch sections, and directly add the recovery logic for errors that may occur in the corresponding sections, thereby developing an automation process that is to operate without failure (or after error recovery). Referring to FIG. 1, assuming that the section (Try-Catch section) where failure is expected includes Step#2 and Step#3, the recovery logic is performed such that re-execution is performed from Step#2 if an error is detected in Step#3. In this case, since the previous execution outputs from the steps where an error occurred may act as obstacles to the proper execution, the file or screen generated during the steps where an error occurred needs to be reset (in its status). The present disclosure proposes a method for automatically resetting the status of steps where an RPA error occurred.

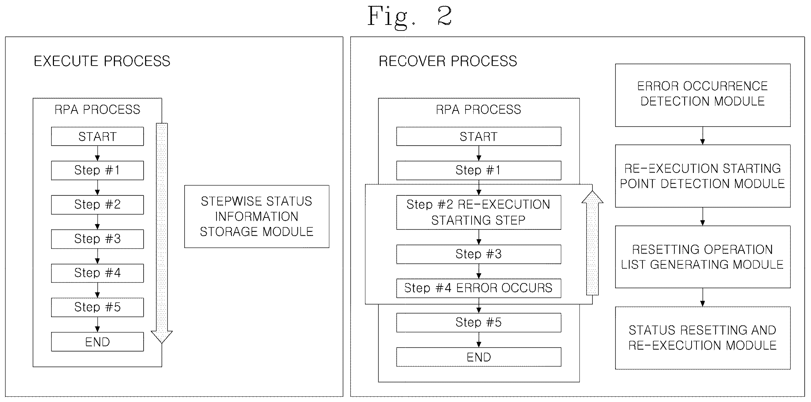

FIG. 2 illustrates a process for recovering an RPA process when an error occurs during execution of the RPA process according to an embodiment of the disclosure.

As in an embodiment of the disclosure, in order to recover an RPA process when an error occurs during execution of the RPA process, a process of storing status information on each step during the RPA process execution (for the subsequent resetting of each step) and an RPA process recovery process (a process of automatically detecting a reset target section for process recovery, mapping operations for reset, and performing re-execution after execution of reset) are required. Here, the status information is information indicating the statuses of respective steps constituting the RPA process, based on at least one status change detection object (e.g., Process, File, Window, Web Browser, Screen, and the like). Here, Process is information on whether a new process has been generated within the system at a certain step, File is information on whether a file has been created, deleted, or changed within the system at a certain step, Window is information on whether a window has been created, closed, or changed within the system at a certain step, Web Browser is information on URL changes within the current web browser at a certain step, and Screen is information on changes in the system screen at a certain step.

Referring to FIG. 2, the illustrated RPA process includes Step#1 to Step#5. Status information about respective steps is stored by a stepwise status information storage module as the respective steps (Step#1 to Step#5) are executed.

For example, if an error occurs at any step (Step#4) during the RPA process, an error occurrence detection module detects it. Subsequently, a re-execution starting point detection module detects the starting point (step) from which re-execution is required, in reverse order from the step (Step#4) where the error was detected. The embodiment shown in FIG. 2 exemplifies the starting step, which requires re-execution, as Step#2. As a result, the steps that require resetting for re-execution are Step#2 to Step#4, so a resetting operation list including a resetting operation for each of the steps is generated (by a resetting operation list generating module). Next, a status resetting and re-execution module performs status resetting for each step, based on the resetting operation list, and performs re-execution of the RPA process for each of the reset steps (Step#2 to Step#4) by restarting the RPA process engine.

According to an embodiment of the disclosure, the process of recovering the RPA process when an error occurs during the execution of the RPA process may also perform automatic recovery (auto healing), when an error occurs later, by learning the resetting and process re-execution for the steps where the error occurred.

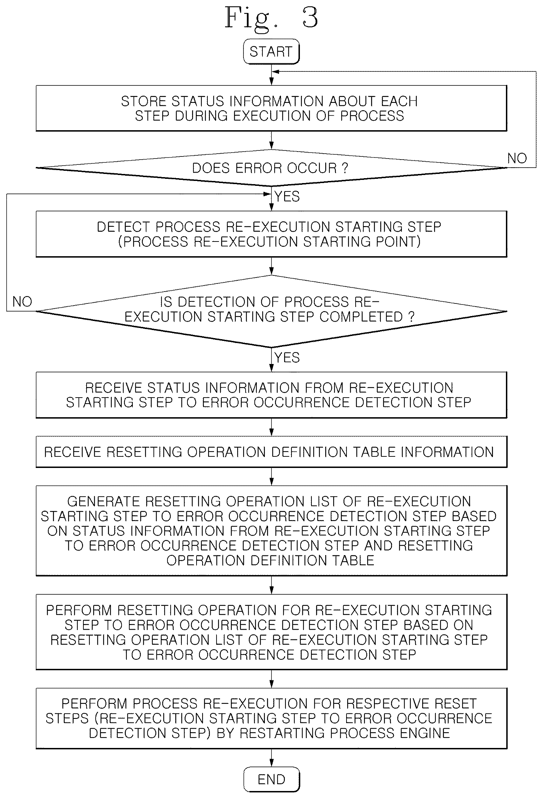

FIG. 3 is a flowchart illustrating a method for automatically resetting the status of steps where an RPA error occurred and performing re-execution according to an embodiment of the disclosure.

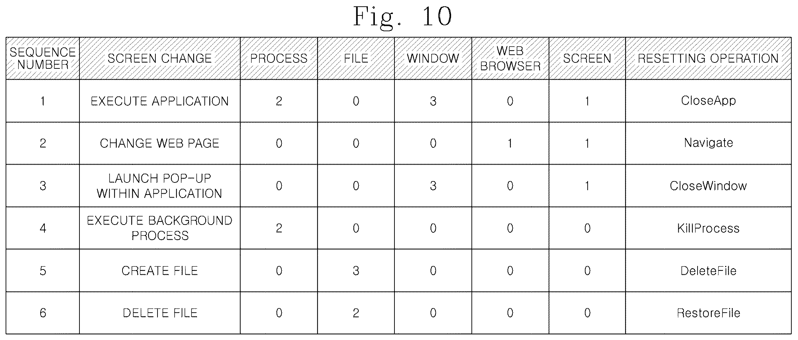

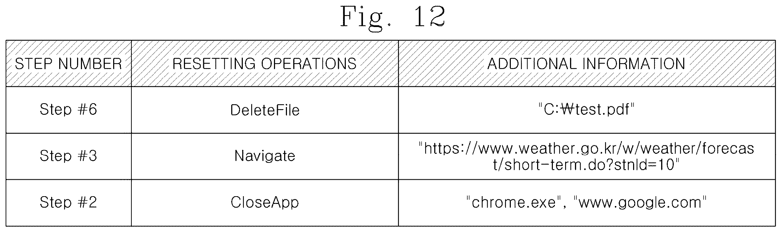

First, status information about each step is stored during the execution of an RPA process (for subsequent resetting of each step). If an error is detected at any step during the RPA process, the error occurrence detection module detects it. Subsequently, the re-execution starting point detection module detects the starting point (step) that requires re-execution in reverse order from the step where the error was detected. If the starting step that requires re-execution is detected, pre-stored status information from the starting step that requires re-execution to the step where the error was detected is received. In addition, resetting operation definition table information from the step that requires re-execution to the step where the error was detected is received. Here, the resetting operation definition table is a table that defines the operations to reset the respective steps that require re-execution due to the occurrence of an error (see FIG. 10) (the resetting operation definition table may be pre-defined information about respective resetting operations, instead of information about a specific step where an error occurred). Next, based on the status information and the resetting operation definition table from the starting step that requires re-execution to the step where the error was detected, a resetting operation list from the starting step that requires re-execution to the step where the error was detected is generated. Here, the resetting operation list includes resetting operation information that allows resetting to be performed in each step, and additional information related to the corresponding resetting operation (e.g., information about the target of the resetting operation, reset command information, URL information for resetting, and the like) (see FIG. 12). Subsequently, based on the generated resetting operation list, the resetting operation is performed from the starting step that requires re-execution to the step where the error was detected. Next, re-execution of the RPA process for the respective reset steps (from the starting step that requires re-execution to the step where the error was detected) is performed by restarting the RPA process engine.

According to an embodiment of the disclosure, since the method for automatically resetting the status of steps where an RPA error occurred and performing re-execution may further include an operation of learning the resetting of each step where an error occurred and the process re-execution, thereby executing automatic recovery (auto healing) when an error occurs later.

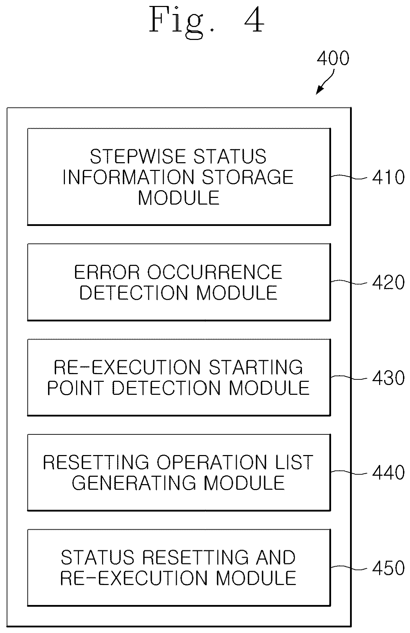

FIG. 4 is a schematic diagram illustrating an apparatus for automatically resetting the status of steps where an RPA error occurred and re-executing an RPA process according to an embodiment of the disclosure.

An RPA process re-execution apparatus 400 according to an embodiment of the disclosure includes a stepwise status information storage module 410, an error occurrence detection module 420, a re-execution starting point detection module 430, a resetting operation list generating module 440, and a status resetting and re-execution module 450.

The stepwise status information storage module 410 stores status information about each step when an RPA process is executed in order to recover the RPA process when an error occurs during the execution of the RPA process (for subsequent resetting of each step).

The error occurrence detection module 420 detects an error occurring at any step of the RPA process.

The re-execution starting point detection module 430 detects the starting point (step) that requires re-execution in reverse order from the step where an error occurred.

The resetting operation list generating module 440 generates a resetting operation list that includes a resetting operation for each step that requires resetting for re-execution.

The status resetting and re-execution module 450 resets the status of each step, based on the generated resetting operation list, and performs re-execution of the RPA process for each reset step by restarting an RPA process engine.

The RPA process re-execution apparatus 400 according to an embodiment of the disclosure may learn the resetting of each step where an error occurred and the process re-execution, thereby executing automatic recovery (auto healing) when an error occurs later.

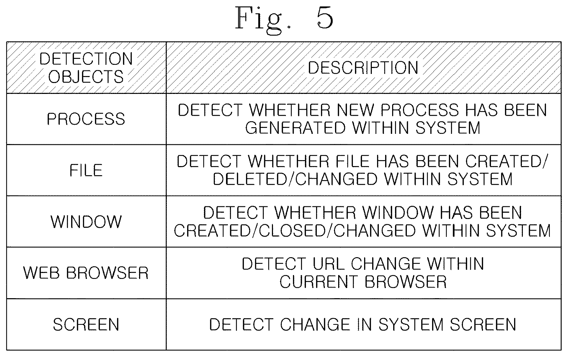

FIG. 5 is a table showing status change detection objects according to an embodiment of the disclosure.

The statuses of respective steps constituting the process may be categorized into Process, File, Window, Web Browser, and Screen, and a change in the status of a corresponding step may be determined (detected) based on the same. That is, whether a new process has been generated within the system at a certain step may be detected, whether a file has been created, deleted, or changed within the system at a certain step may be detected, whether a window has been created, closed, or changed within the system at a certain step may be detected, URL changes within the current web browser at a certain step may be detected, and changes in the system screen at a certain step may be detected. Although the embodiment of the disclosure exemplifies a case where the status change of each stage is detected based on the categories of Process, File, Window, Web Browser, and Screen, the status change detection objects are not limited to these five categories.

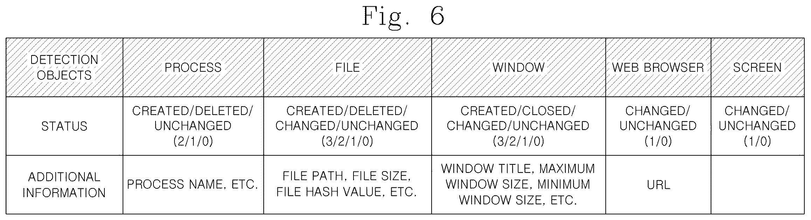

FIG. 6 illustrates a schema for storing status changes occurring during execution of an RPA process according to an embodiment of the disclosure.

The status change detection objects for each step exemplified in the embodiment of the disclosure are Process, File, Window, Web Browser, and Screen. The status of Process at each step may be distinguished as generated/deleted/unchanged, and may be represented by 2/1/0, respectively. The status of File at each step may be distinguished as created/deleted/changed/unchanged, and may be represented by 3/2/1/0, respectively. The status of Window at each step may be distinguished as created/closed/changed/unchanged, and may be represented by 3/2/1/0, respectively. The status of Web Browser at each step may be distinguished as changed/unchanged, and may be represented by 1/0, respectively. The status of Screen at each step may be distinguished as changed/unchanged, and may be represented by 1/0, respectively. The schema that stores the status change may include additional information related to the respective status change detection objects. For example, additional information such as a process name and the like may be included for Process to be detected, additional information such as a file path, a file size, a file hash value, and the like may be included for File to be detected, information such as a window title, a maximum window size, a minimum window size, and the like may be included for Window to be detected, and information such as a URL may be included for Web Browser to be detected.

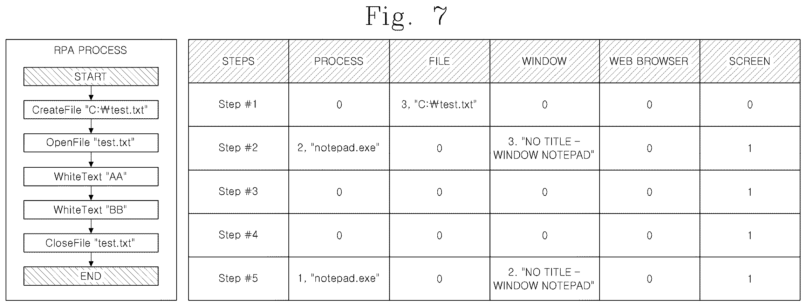

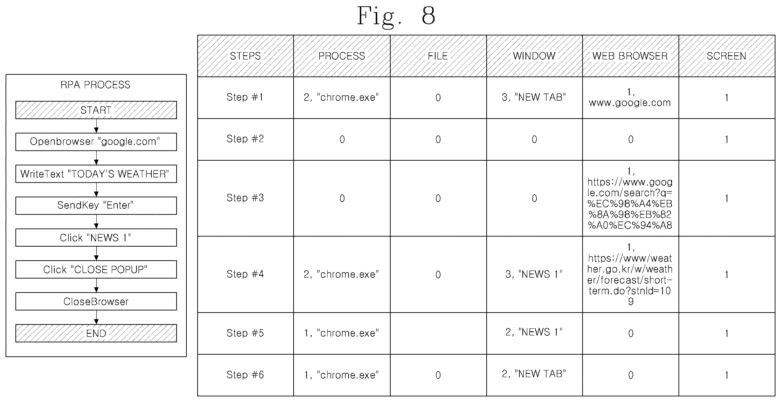

FIGS. 7 and 8 illustrate status information tables for storing status changes for each step, which occur during execution of an RPA process, according to an embodiment of the disclosure.

FIG. 7 exemplifies a status information table that stores state changes occurring at each step when the executed RPA process is "Launching notepad and editing text." The RPA process exemplified herein includes five steps (Step#1 to Step#5).

Specifically, the file "C:/test.txt" is generated in Step#1, the file "test.txt" is opened in Step#2, the text "AA" is input in Step#3, the text "BB" is input in Step#4, and the file "test.txt" is closed in Step#5.

If an operation of generating the file "C:/test.txt" is performed in Step#1, status information about File becomes 3 (file generated). If an operation of opening the file "test.txt" is performed in Step#2, status information about Process becomes 2 (notepad execution generated), status information about Window becomes 3 (notepad window created), and status information about Screen becomes 1 (changed). If an operation of entering the text "AA" in Step#3 and an operation of entering the text "BB" in Step#4 are performed, information about Screen becomes 1 (changed). If an operation of closing the file "test.txt" is performed in Step#5, status information about Process becomes 1 (notepad execution deleted), status information about Window becomes 2 (notepad window closed), and information about Screen becomes 1 (changed).

FIG. 8 exemplifies a status information table that stores state changes occurring at each step when the executed RPA process is "Searching and viewing Google News." The RPA process exemplified herein includes six steps (Step#1 to Step#6).

Specifically, the web browser "google.com" is opened in Step#1, the text "Today's weather" is entered in Step#2, the "Enter" key is pressed in Step#3, "News 1" is clicked in Step#4, "Close popup" is clicked in Step#5, and the browser is closed in Step#6.

If an operation of opening the web browser "google.com" is performed in Step#1, status information about Process becomes 2 (Chrome execution generated), status information about Window becomes 3 (new tab window created), and status information about Web Browser becomes 1 (web browser changes to www.google.com). If an operation of entering the text "Today's weather" is performed in Step#2, status information about Screen becomes 1 (changed). If an operation of pressing the "Enter" key is performed in Step#3, status information about Web Browser becomes 1 (changed), and status information about Screen becomes 1 (changed). If an operation of clicking "News1" is performed in Step#4, status information about Process becomes 2 (Chrome execution generated), status information about Window becomes 3 (News1 window created), status information about Web Browser becomes 1 (changed), and status information about Screen becomes 1 (changed). If an operation of clicking "Close popup" is performed in Step#5, status information about Process becomes 1 (Chrome execution deleted), status information about Window becomes 2 (News1 window closed), and status information about Screen becomes 1 (changed). If an operation of closing the browser is performed in Step#6, status information about Process becomes 1 (Chrome execution deleted), status information about Window becomes 2 (new tab window closed), and status information about Screen becomes 1 (changed).

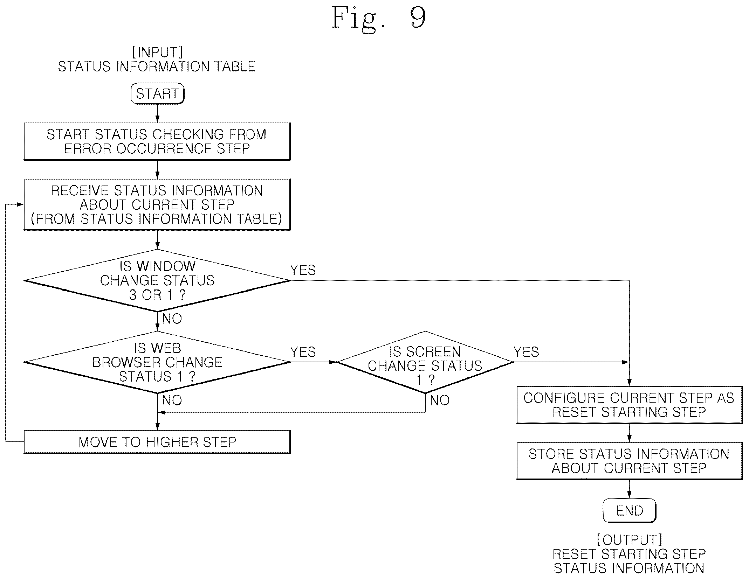

FIG. 9 is a flowchart illustrating a process for detecting a re-execution (resetting) starting step and outputting status information of the re-execution (resetting) starting step according to an embodiment of the disclosure.

If an error is detected at any step during RPA execution, status checking begins from the step where the error was detected. After receiving status information about the step where the error occurred from the status information table, Window status information is first checked. If the Window change status is 3 or 1 (a window is created or a change occurs in the window), the corresponding step is configured as the reset starting step. Then, the status information about the reset starting step is stored and the status information about the reset (re-execution) starting step is output. In the case where the Window change status is not 3 or 1 (a window is closed or there is no change in the window), when the Web Browser change status is 1 (changed) and when the Screen change status is 1 (changed), the corresponding step is configured as the reset starting step. Subsequently, the status information about the reset starting step is stored, and the status information for the reset (re-execution) starting step is output.

If the Window change status is not 3 or 1, the Web Browser change status is not 1, or the Screen change status is not 1, the process moves to a higher step than the error-detected step and receives status information for that higher step from the status information table. Then, the same checking (Window change status, Web Browser change status, and Screen change status) as for the error-detected step is repeated for the higher step. This checking is repeated until the reset (re-execution) starting step is found.

FIG. 10 illustrates a resetting operation definition table according to an embodiment of the disclosure.

The resetting operation definition table defines operations of resetting the statuses (based on status information) of respective steps constituting the RPA process. Here, the status of each step may be exemplified as application execution, web page change, pop-up execution in the application, background process execution, file creation, or file deletion.

Referring to FIG. 10, for example, the application execution indicates status information such as Process 2, File 0, Window 3, Web Browser 0, and Screen 1, and in this case, an operation of resetting this application execution is closing the application (CloseApp). In addition, the web page change indicates status information such as Process 0, File 0, Window 0, Web Browser 1, and Screen 1, and in this case, an operation of resetting this web page change is restoring the web page to its original status (Navigate). In addition, the pop-up execution in the application indicates status information such as Process 0, File 0, Window 3, Web Browser 0, and Screen 1, and in this case, an operation of resetting this pop-up execution in the application is closing the relevant pop-up window (CloseWindow). Additionally, the background process execution indicates status information such as Process 2, File 0, Window 0, Web Browser 0, Screen 0, and in this case, an operation of resetting this background process execution is to stop the process (KillProcess). In addition, the file creation indicates status information such as Process 0, File 3, Window 0, Web Browser 0, Screen 0, and in this case, an operation of resetting this file creation is to delete the file (DeleteFile). In addition, the file deletion indicates status information such as Process 0, File 2, Window 0, Web Browser 0, Screen 0, and in this case, an operation of resetting this file deletion is to restore the file (RestoreFile).

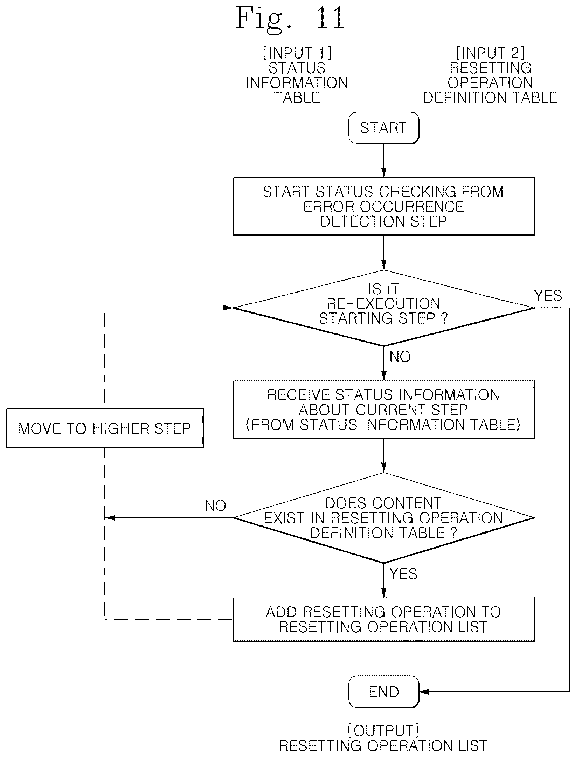

FIG. 11 is a flowchart illustrating a process for generating a resetting operation list according to an embodiment of the disclosure.

After receiving a status information table and a resetting operation definition table for respective steps, status information checking starts from the step where an error was detected. If the step where an error was detected is the re-execution (reset) starting step, the resetting operation list for the re-execution (reset) starting step is immediately output. If the error-detected step is not the re-execution starting step, the status information for the error-detected step is retrieved from the status information table. If there is status information matching the status information in the resetting operation definition table, the resetting operation corresponding to the status information is added to the resetting operation list. Subsequently, the process moves to a higher step, and the generating of the resetting operation list is repeated until the re-execution starting step is reached. Once the generation of the resetting operation list up to the re-execution starting step is complete, the corresponding resetting operation list is output.

FIG. 12 illustrates a resetting operation list according to an embodiment of the disclosure.

As illustrated in FIG. 12, the resetting operation list includes information about steps (steps subject to resetting) where errors occurred during the RPA process and the resetting operations of resetting the steps subject to resetting.

The Steps having status information matching the status information contained in the resetting operation definition table are included in the resetting operation list in reverse order, starting from the error-detected step.

The embodiment in FIG. 12 exemplifies a case where Step#6, Step#3, and Step#2 are included in the resetting operation list in reverse order. It is assumed that the DeleteFile operation must be executed to reset Step#6 (Step#6 has status information corresponding to sequence number 5 in the resetting operation table), that the Navigate operation must be executed to reset Step#3 (Step#3 has status information corresponding to sequence number 2 in the resetting operation table), and that the CloseApp operation must be executed to reset Step#2 (Step#2 has status information corresponding to sequence number 1 in the resetting operation table). Additional information related to each resetting operation may also be included in the resetting operation list. For example, the target file information (C:/test.pdf) of the DeleteFile operation may be included as additional information, the target URL information

(https://weather.go.kr/w/weather/forecast/short-term.co?stnld=10) of the Navigate operation may be included as additional information, and the target application information (chrome.exe, www.google.com) of the CloseApp operation may be included.

### Apparatus to which the proposed method of the disclosure is applicable

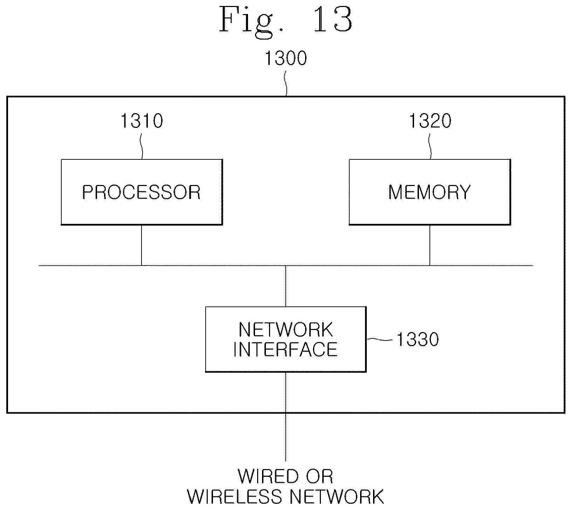

FIG. 13 illustrates an apparatus 1300 to which the proposed method of the disclosure is applicable. The apparatus 1300 may be a server or terminal that automatically resets the status of steps where an RPA error occurred.

Referring to FIG. 13, the apparatus 1300 may be a server apparatus or terminal apparatus configured to implement a process for a method of automatically resetting the status of steps where an RPA error occurs.

For example, the apparatus 1300 to which the proposed method of the disclosure is applicable may include network devices such as repeaters, hubs, bridges, switches, routers, gateways, and the like, computer devices such as desktop computers, workstations, and the like, mobile terminals such as smartphones and the like, portable devices such as laptop computers and the like, home appliances such as a digital TV and the like, and vehicles such as an automobile and the like. As another example, the apparatus 1300 to which the disclosure is applicable may be included as part of an ASIC (Application Specific Integrated Circuit) implemented in the form of an SoC (System-on-Chip).

The memory 1320 may be connected to the processor 1310 during operation, and may store programs and/or instructions for processing and controlling of the processor 1310, and may store data and information used in the disclosure, control information required for processing data and information according to the disclosure, and temporary data generated during the data and information processing process. The memory 1320 may be implemented as a storage device such as a ROM (Read-Only Memory), a RAM (Random Access Memory), an EPROM (Erasable Programmable Read-Only Memory), an EEPROM (Electrically Erasable Programmable Read-Only Memory), a flash memory, an SRAM (Static RAM), an HDD (Hard Disk Drive), an SSD (Solid State Drive), and the like.

The processor 1310 may be operatively connected to the memory 1320 and/or a network interface 1330, and may control the operation of respective modules in the apparatus 1300. In particular, the processor 1310 may perform various control functions for performing the proposed method of the disclosure. The processor 1310 may also be called a controller, a micro-controller, a micro-processor, a microcomputer, or the like. The proposed method of the disclosure may be implemented by hardware, firmware, software, or a combination thereof. When implementing the disclosure using hardware, an ASIC (application specific integrated circuit) or a DSP (digital signal processor), a DSPD (digital signal processing device), a PLD (programmable logic device), an FPGA (field programmable gate array), or the like, configured to perform the disclosure, may be provided in the processor 1310. Meanwhile, when implementing the proposed method of the disclosure using firmware or software, the firmware or software may include instructions related to modules, procedures, or functions that perform functions or operations necessary for implementing the proposed method of the disclosure, and the instructions may be stored in the memory 1320 or stored in a computer-readable recording medium (not shown) separate from the memory 1320, and may be configured to cause, when executed by the processor 1310, the apparatus 1300 to perform the proposed method of the disclosure.

In addition, the apparatus 1300 may include a network interface device 1330. The network interface device 1330 may be connected to the processor 1310 during operation, and the processor 1310 may control the network interface device 1330 to transmit or receive wireless/wired signals carrying information, data, signals, and/or messages through a wireless/wired network. The network interface device 1330 may support various communication standards such as IEEE 802 series, 3GPP LTE(-A), 3GPP 5G, etc., and may transmit and receive control information and/or data signals according to the corresponding communication standards. The network interface device 1330 may be implemented outside the apparatus 1300 as needed.

The embodiments described in this specification and the attached drawings are merely exemplary and do not limit the scope of the disclosure in any way. In addition, the connections or connection members between the components illustrated in the drawings are examples of functional connections and/or physical or circuit connections, and may be represented as various functional connections, physical connections, or circuit connections that are replaceable or addible in an actual device. In addition, unless specifically stated with "essential," "important," etc., the components may not be essential for the application of the disclosure.

In the specification (especially, in the claims) of the disclosure, the term "said" and indicative terms similar thereto may be used for both a single element or multiple elements. In addition, if a range is stated in the disclosure, it encompasses embodiments to which respective values within the range are applied (unless otherwise stated), and the respective values constituting the range are regarded as being described in the detailed description of the disclosure. In addition, the operations presented in the method of the disclosure are not intended to be restricted in their sequence, and the sequence thereof may be appropriately changed as needed, unless a certain operation must precede according to the nature of the process. All examples or the use of exemplary terms (e.g., etc.) in the disclosure is merely intended to describe the disclosure in detail, and the scope of the disclosure is not limited to the examples or exemplary terms, unless limited by the claims. In addition, those skilled in the art will understand that various modifications, combinations, and changes may be configured according to design conditions and elements without departing from the scope of the appended claims or their equivalents.

## Claims

1. A method for automatically resetting statuses of error occurrence steps in an RPA process, the method comprising:
receiving status information for respective steps in reverse order of the RPA process from a step where an error was detected;
adding a resetting operation corresponding to the status information to a resetting operation list; and
resetting the statuses of the error occurrence steps based on the resetting operation list.

2. The method of claim 1,
wherein the status information is information indicating statuses of respective steps constituting the RPA process, based on at least one status change detection object.

3. The method of claim 2,
wherein the status change detection object comprises at least one of Process, File, Window, Web Browser, and Screen.

4. The method of claim 3,
wherein the status information about Process is information regarding whether a new process has been generated within a system at a certain step,
wherein the status information about File is information regarding whether a file has been created, deleted, or changed within the system at a certain step,
wherein the status information about Window is information regarding whether a window has been created, closed, or changed within the system at a certain step,
wherein the status information about Web Browser is information regarding a URL change within a current web browser at a certain step, and
wherein the status information about Screen is information regarding a change in a system screen at a certain step.

5. The method of claim 1,
wherein the resetting of the statuses of the error occurrence steps is repeated in reverse order of the RPA process from the step where the error was detected until a reset starting step is reached.

6. The method of claim 5, further comprising
determining a step as the reset starting step when a window is created or a change occurs in a window, or when a change occurs in a web browser and a change occurs in a screen.

7. The method of claim 1,
wherein the adding of the resetting operation corresponding to the status information to the resetting operation list is performed when there is status information matching the status information in a resetting operation definition table.

8. A computer program stored on a medium to execute, in conjunction with hardware, a method for automatically resetting statuses of error occurrence steps of the RPA process of claim 1.

9. An apparatus for automatically resetting statuses of error occurrence steps of an RPA process, the apparatus comprising a processor,
wherein the processor is configured to:
receive status information for respective steps in reverse order of the RPA process from a step where an error was detected;
add a resetting operation corresponding to the status information to a resetting operation list; and
reset the statuses of the error occurrence steps based on the resetting operation list.

10. The apparatus of claim 9,
wherein the status information is information indicating statuses of respective steps constituting the RPA process, based on at least one status change detection object.

11. The apparatus of claim 10,
wherein the status change detection object comprises at least one of Process, File, Window, Web Browser, and Screen.

12. The apparatus of claim 11,
wherein the status information about Process is information regarding whether a new process has been generated within a system at a certain step,
wherein the status information about File is information regarding whether a file has been created, deleted, or changed within the system at a certain step,
wherein the status information about Window is information regarding whether a window has been created, closed, or changed within the system at a certain step,
wherein the status information about Web Browser is information regarding a URL change within a current web browser at a certain step, and
wherein the status information about Screen is information regarding a change in a system screen at a certain step.

13. The apparatus of claim 9,
wherein the processor is configured to repeat the resetting of the statuses of the error occurrence steps in reverse order of the RPA process from the step where the error was detected until a reset starting step is reached.

14. The apparatus of claim 13,
wherein the processor is configured to determine a step as the reset starting step when a window is created or a change occurs in a window, or when a change occurs in a web browser and a change occurs in a screen.

15. The apparatus of claim 9,
wherein the processor is configured to add the resetting operation corresponding to the status information to the resetting operation list when there is status information matching the status information in a resetting operation definition table.
